# EUROPEAN PATENT SPECIFICATION

(11) **EP 3 941 023 B1**
(45) Date of publication and mention of the grant of the patent: **09.10.2024**
(21) Application number: 21179446.6
(22) Date of filing: 15.06.2021
(51) Int. Cl.: H04L 67/306, H04L 67/06, H04L 67/50, H04L 67/52, G06Q 30/0251, G06Q 30/0282

(54) **METHOD FOR RECOMMENDING PERSONALIZED CONTENT, GRAPHICAL USER INTERFACE AND SYSTEM THEREOF**
VERFAHREN ZUR EMPFEHLUNG VON PERSONALISIERTEN INHALTEN, GRAFISCHE BENUTZEROBERFLÄCHE UND SYSTEM DAFÜR
PROCÉDÉ DE RECOMMANDATION DE CONTENU PERSONNALISÉ, INTERFACE UTILISATEUR GRAPHIQUE ET SYSTÈME ASSOCIÉ

(30) Priority: 17.07.2020 TW 109124208
(43) Date of publication of application: 19.01.2022
(73) Proprietor: Framy Inc., Grand Cayman KY1-1208, Cayman Islands (KY)
(72) Inventor: LI, YU-HSIEN, 116 TAIPEI CITY (TW); LEE, YU-CHIH, 220 New Taipei City (TW); LIN, WEN-SHIANG, 247 New Taipei City (TW); LI, SHI-TING, 709 Tainan City (TW); HU, HAN-HSI, 116 Taipei City (TW); CHENG, CHIA-YUAN, 115 Taipei City (TW)
(74) Representative: Wunderlich & Heim Patentanwälte PartG mbB

(56) References cited:
- US-B1- 9 212 918
- MUDASSAR AHMED KHAN: "Google Maps API V3: Center and Zoom to fit all markers on Google Maps", 4 March 2016 (2016-03-04), XP055374310, Retrieved from the Internet <URL:https://web.archive.org/web/20160304123823/https://www.aspsnippets.com/Articles/Google-Maps-API-V3-Center-and-Zoom-to-fit-all-markers-on-Google-Maps.aspx> [retrieved on 20170518]

## Description

### CROSS-REFERENCE TO RELATED PATENT APPLICATION

This application claims the benefit of priority to Taiwan Patent Application No. 109124208, filed on July 17, 2020.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein.

### FIELD OF THE DISCLOSURE

The present disclosure relates to a technology for recommending digital content, and more particularly to a method for recommending personalized content via an interface of an electronic map, a user interface for providing digital content linking points, and a system for implementing the method.

### BACKGROUND OF THE DISCLOSURE

When a user browses contents in a social media by using an application thereof, a serving system of the social media can learn the user's interests according to the contents browsed by the user. Therefore, through the social media application, the serving system not only provides contents from friends of the user and those from subscriptions in the social media, but can also provide the user with contents recommended by the social media according to the user's interests.

The social media application can be an application (an "app") executed in a mobile phone. The contents in the social media that can be browsed through the application are mostly listed line by line. Since location data generated by a user device (i.e., a location of the user) is referred to in the serving system, relevant contents (such as advertisements) may be inserted in the listed contents. However, the serving system of the social media is still not capable of allowing the user to browse or select the location-based contents effectively.

US 9,212,918 B1 discloses a system and a method for generating and displaying a poe data associated with multiple surges on a single digital map.

### SUMMARY OF THE DISCLOSURE

The present disclosure is related to a method and a system for recommending personalized content, and a graphical user interface. The method is operated in a serving system, which provides a solution to recommend location-based digital contents based on personalized preference of a user.

The system for recommending the personalized digital content includes a serving system having a database that stores multiple digital contents. The digital content is correlated with one geographical location. The system includes an application executed in a user device for initiating the graphical user interface that shows an electronic map in a background.

In one embodiment of the present disclosure, in the serving system, a user identification data is received from the user device. After querying a database to acquire data of a user preference, such data is used to obtain one or more digital contents that match the user preference. After that, the one or more digital contents can be grouped according their corresponding location data so as to render one or more thumbnail images representing one or more one or more groups of digital content within a geographic range.

After that, the serving system provides one or more thumbnail images to the user device. The one or more thumbnail images are then displayed on a thumbnail display area of an application interface in the user device. The user can select one of the thumbnail images by clicking or sliding his hand over the thumbnail display area. The application interface switches to the geographic range represented by the selected thumbnail image. The geographic range indicates an area in the electronic map. On the application interface, the serving system displays one or more linking icons corresponding to one or more linking points within the geographic range.

More specifically, the user device can activate the application interface for receiving a location data. An initial page specifying the location data can be displayed on the application interface. In the meantime, the system matches the digital content with the user preference and the location data. The serving system provides the one or more linking points displayed on the initial page.

The linking point can link to multiple digital contents, and the digital contents can be played in sequence when the linking point is selected.

According to one embodiment of the present disclosure, the user device initiates a graphical user interface with an electronic map as a background interface. The graphical user interface includes a linking point display area that is used to display the electronic map within a specific geographic range. The serving system provides the linking icons corresponding to the one or more linking points within the geographic range. The thumbnail display area is used to display the one or more thumbnail images provided by the serving system. An interactive interface section is used to display the icons that allow the user to interact and generate interactive instructions.

Further, in the graphical user interface, the one or more thumbnail images displayed on the thumbnail display area can be expanded or shrunk in response to a gesture of the user, and can be activated by a sliding or clicking gesture. The thumbnail image can be highlighted by changing its color or being enlarged. When the application interface switches to a geographic range according to the selected thumbnail image, the serving system receives a location data from the user device and obtains the one or more linking points within the geographic range by querying the database. After one of the linking points is selected, the digital contents associated with the linking point can be played.

To establish the user preference, the serving system collects activity data in a network from the user device. The various activity data form a location-based and/or personalized data for the user. According to the location-based and/or personalized data, the system learns the location-based data features and weights specified to the various data features, so as to form a personalized preference model that is used to describe the user preference. The personalized preference model allows the system to obtain the one or more digital contents that match the user preference.

These and other aspects of the present disclosure will become apparent from the following description of the embodiment taken in conjunction with the following drawings and their captions, although variations and modifications therein may be affected within the scope of the appended claims.

### BRIEF DESCRIPTION OF THE DRAWINGS

The described embodiments may be better understood by reference to the following description and the accompanying drawings, in which:
Fig. 1 is a schematic diagram depicting a framework of a system for recommending personalized content according to one embodiment of the present disclosure;
Fig. 2 is a flow chart describing a process of learning user preference according to one embodiment of the present disclosure;
Fig. 3 is a schematic diagram depicting a user interface initiated in a method for recommending personalized content according to one embodiment of present disclosure;
Fig. 4 is another schematic diagram depicting the user interface initiated in the method for recommending personalized content according to one embodiment of the present disclosure;
Fig. 5 is yet another schematic diagram depicting the user interface initiated in the method for recommending personalized content according to one embodiment of the present disclosure;
Fig. 6 is still yet another schematic diagram depicting the user interface initiated in the method for recommending personalized content according to one embodiment of the present disclosure; and
Fig. 7 is a flow chart describing the method for recommending personalized content according to one embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

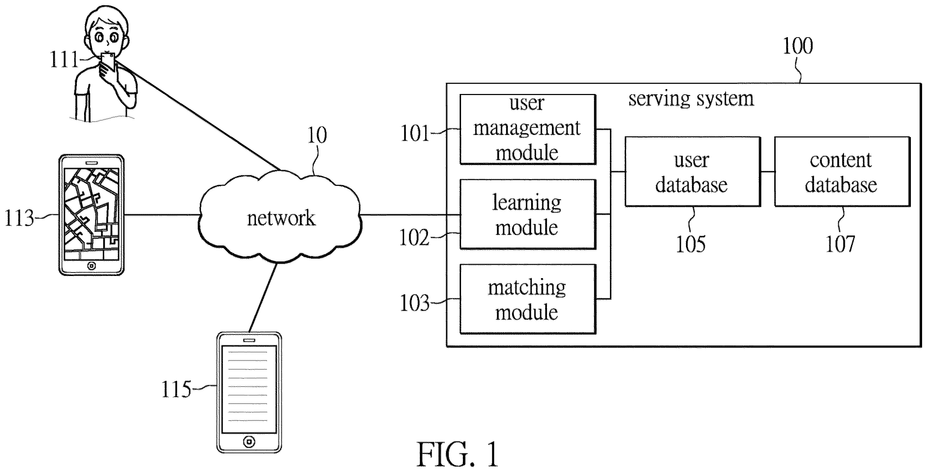

The present disclosure is related to a method and a system for recommending personalized content, and a graphical user interface. One of the objectives of the system is to recommend a user one or more personalized/location-based digital contents within a geographic range via the graphical user interface. Reference is made to Fig. 1, which is a schematic diagram depicting a framework of the system for recommending personalized content according to one embodiment of the present disclosure.

The system includes a serving system 100 shown in the diagram. The serving system 100 can be implemented by a server operating with software and hardware. The serving system 100 includes a plurality of functional modules that are implemented by cooperation of software and hardware, such as a user management module 101, a learning module 102 and a matching module 103 according to their functions. The serving system 100 includes a database that is implemented by a storage device, and the database can be separated into a user database 105 and a content database 107 according to the respective functions.

The user database 105 stores member data, which include user identification data and various identity data of registered users. Community information (including friends, shares, likes, joined groups, etc.) associated with the users can be annotated in the user database 105. These data can be regarded as references provided for the system to learn user preferences. The content database 107 stores multiple digital contents that are captured, recorded, produced and updated by various users. The digital content is preferably a location-based digital content that is associated with a geographical location.

The system provides an application program that is configured to be executed in a user device (111, 113 or 115). When the application program is executed, the graphical user interface is initiated. An electronic map can be used in the graphical user interface as a background interface. The graphical user interface has the electronic map shown as the background for the user to browse the digital contents. One or more thumbnail images shown on the graphical user interface can be one or more linking points acting as points of interest associated with geographical locations. The one or more thumbnail images can also be directed to one or more user points that are directed to digital contents uploaded by the users. The thumbnail images allow the user to select and switch to a specific geographic range. The user can then select one of the digital contents to be played.

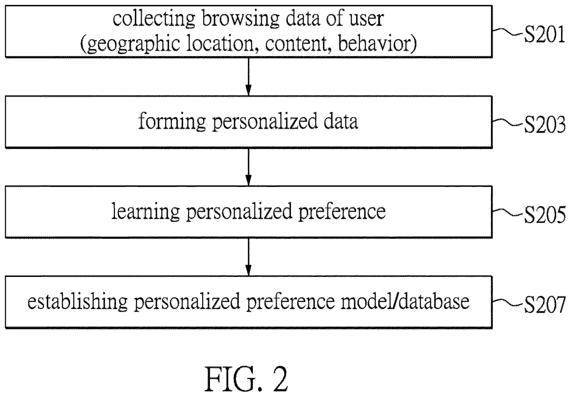

The serving system 100 includes the user management module 101. The user management module 101 is used to manage an authentication procedure and accounts specified to the users when the users log on the serving system 100 via a network 10 from the various user devices 111, 113 and 115. In one embodiment of the present disclosure, the serving system 100 performs a software program for collecting user data, such as activity data of the users in the community. The activity data in the community are generated by activities that the users participate in the community. The activity data includes joined groups, friends, shares, likes and the updated contents associated with the user. The activity data is provided for the learning module 102 of the serving system 100 to learn and analyze the data for establishing the user preferences. Fig. 2 is a flow chart describing a process for establishing a personalized preference model according to one embodiment of the present disclosure. When the user logs on the serving system 100, the software-implemented matching module 103 can actively recommend the digital contents to the user. More specifically, the matching module 103 matches features (e.g., various attribute tags) of the digital contents in the database with the user preference, and provides the matched digital contents to the user device (111, 113 or 115). The user can watch the digital contents via the application program.

Reference is made to the flow chart shown in Fig. 2. The above-mentioned system learns the user preference based on the various activity data of the user. Further, the system can learn and classify the personalized and location-based digital contents.

In step S201, the serving system collects the data (such as the activity data in various social media and browsed data) via a browsing program executed in the user device. The activity data has its own features and can also correlate to geographic data. The serving system collects the activity data including the location-based data via the browsing program when the user uses the browsing program executed in the user device to browse contents over the network. For example, when a user reaches a location, the user uses the browsing program to produce videos, audios, pictures and/or texts, and uploads the contents to the serving system through a connection to the serving system. The content uploaded to the serving system carries a metadata that records a geographic data where the content is created. Therefore, the serving system obtains the metadata and the user identification data at the time when the user logs on the serving system. In step S203, the serving system analyzes the digital contents browsed by the user to form a personalized data or location-based personalized data that can be used to establish the user preference. The user preference is recorded in the database of the serving system.

In addition to establishing the database with the location-based contents by the serving system, the serving system collects the activity data of the users over the network through software programs executed in end-user computer devices. In step S205, the serving system analyzes the various activity data and the related geographic data so as to form the personalized data. A machine-learning algorithm can be incorporated to learn the data features from the geographic data, so as to obtain personalized and/or location-based preference, and also learn weights with respect to the data features. In step S207, a personalized preference model that is used to define each user preference is formed for each of the users. A combination of feature information may also constitute the user preference. The serving system can accordingly rely on the user preference to provide one or more location-based personalized contents. It should be noted that the data features learned through the machine-learning algorithm can be assigned with different weights according to their levels of relevance. The feature with higher relevance can be assigned with a higher weight, and the feature with lower relevance can be assigned with a lower weight. Therefore, the user preference can be accurately described.

In one embodiment of the present disclosure, the activity data collected by the serving system from the end-user computer devices includes the activities on various social media, the search records, the followed contents, the browsed contents, and time information for these activities. For example, browsing records collected by the serving system can be cookies, copies, and history records kept in a web browser. The activities on the social media include acts of check-ins, search records, likes, shares, follows, replies, etc. Such activity information may include records of geographic locations. The records may cover the data of the related geographies and the location-based media contents. Further, when determining a level of the user preference, the serving system can take into account the time spent, the period of time, the frequency and length of time spent by the user browsing the content, if the user shares the content with other users, and whether or not the content is produced by the user. The serving system relies on these data to establish the personalized preference model and the database. The serving system can therefore perform a sorting of preference while providing the personalized content to the user.

According to one of the embodiments, the serving system provides the contents to be browsed on an electronic map through the browser program executed in the end-user computer device when the user browses the content on the electronic map. Each of the contents links to a specific geographic location. While browsing the contents, the serving system simultaneously gathers browsing records such as videos, audios, pictures, and/or texts from the user. The records include the user identification data, a geographic location or a geographic range (latitude and longitude), browsing contents, and the activities (such as likes, bookmarks, shares, etc.). The records may also include tags and times assigned to the contents. The records are references that can be learned by a learning algorithm to form the user preference.

In one further embodiment of the present disclosure, the browser program provided by the serving system acts as a user interface provided for the user to browse the contents. The browser program can be a web browser provided for the user to browse various contents. The browsed content (including browsing record of the user) may be marked with the geographic information for the learning algorithm to learn a preference of the user and/or the location-based preference thereof.

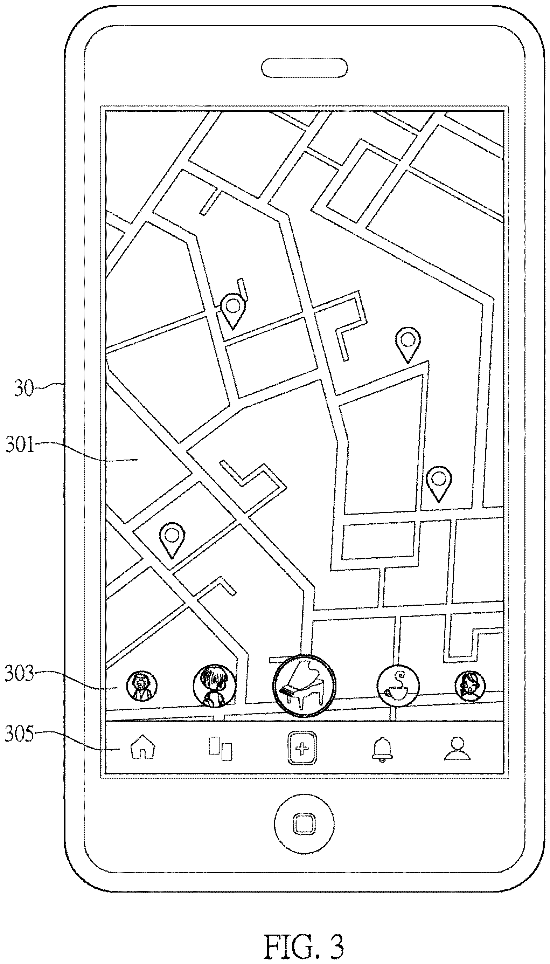

Reference is made to Fig. 3, which is a schematic diagram depicting a user interface initiated in the method for recommending personalized content according to one embodiment of the present disclosure.

The application program executed in the user device initiates an application interface 30, which shows the graphical user interface (GUI) that employs the electronic map in the background and initiates a linking point display area 301. The electronic map can be a three-dimensional map or a plane map that is configured to display a specific geographic range selected by the user through an input device, a gesture or a stylus. The serving system provides one or more linking icons corresponding to one or more points within the geographic range.

In the present example, a thumbnail display area 303 is provided at the bottom of the linking point display area 301, but the position of the thumbnail display area 303 is not limited to any specific position. The thumbnail display area 303 includes one or more thumbnail images provided by the serving system to the user device. Each of the thumbnail images is linked to a specific geographical location. The thumbnail images exemplarily shown in the diagram are several circular thumbnail images with different sizes. It should be noted that the shapes and the positions of the thumbnail images are not limited to those shown in the diagram. In one of the embodiments, the user can select one of the thumbnail images shown in the thumbnail display area 303, and the linking point display area 301 can be switched to a corresponding geographic range. The thumbnail image is configured to link to a geographical location that may be at a central position of the geographic range. Further, the size of the geographic range can be determined according to the weights that are calculated based on some reference indicators. The reference indicators include various activity records, such as the activities of the user changing the geographical location, browsing the digital contents and the time thereof. The reference indicators are referred to for the system to determine the geographic range corresponding to each of the thumbnail images shown on the linking point display area 301.

In one further embodiment of the present disclosure, when receiving the user identification data from the user device, the serving system obtains one or more digital contents that match the user preference by querying the database. The one or more digital contents can be grouped according their corresponding location data. The digital contents obtained within the geographic range can be grouped and can be represented by a representative icon that acts as the corresponding thumbnail image. For example, the representative icon can be selected from the digital content having the highest matching score or closest to the user preference within the geographic range. The digital content with the highest matching score or closest to the user preference may mean that the digital content has the most matched tags with the user preference or the highest score after calculation in consideration of weights. In the thumbnail display area 303, one or more thumbnail images that represent one or more groups of digital contents within the geographic range are shown. When the user selects one of the thumbnail images, the linking point display area 301 is switched to a geographic range corresponding to the selected thumbnail image. In the meantime, the serving system receives the geographic data associated with the geographic range, and then provides one or more linking points within the geographic range. After that, one or more linking icons corresponding to the one or more linking points can be shown in the linking point display area 301.

The graphical user interface further includes an interactive interface section 305. The interactive interface section 305 can be at a bottom or any position on the graphical user interface. The interactive interface section 305 provides several functional icons for the user to generate an interactive instruction. For example, regardless of any location-based content currently displayed by the application program, one of the functional icons in the interactive interface section 305 allows the graphical user interface to return to a main page with a geographic range that may correspond to a current location of the user. Further, another functional icon in the interactive interface section 305 allows the application program to show the digital contents that the user collects, follows, likes, or to check other users who follow the digital contents uploaded by the user. In this way, the user can quickly search the interested contents. The interactive interface section 305 also includes a functional icon that allows the user to quickly capture or select the digital content to be uploaded to the serving system. Still further, the interactive interface section 305 provides a linking icon that allows the user to browse statuses of his friends, and another linking icon that allows the user to edit the user data.

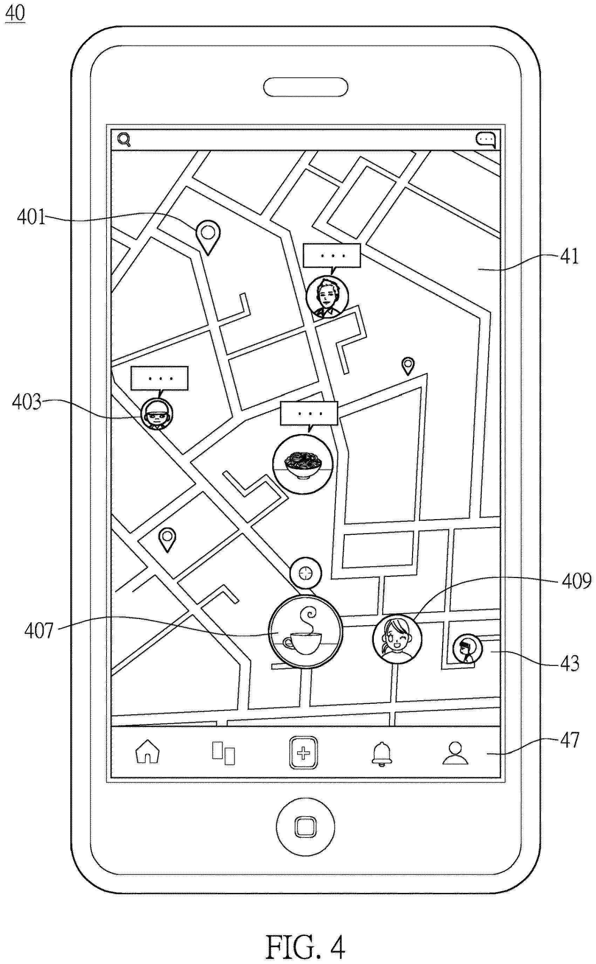

Fig. 4 then shows another schematic diagram depicting a user interface initiated in the method for recommending personalized content according to one embodiment of the present disclosure. An application interface 40 shown in the diagram can be an initial page when the application program is executed in the user device. The initial page can be the main page of the user. The main page can be determined by the application program according to the location data provided by the user device.

The application interface 40 includes a linking point display area 41, in which the graphical user interface employs the electronic map in the background. One or more linking points within a geographic range are displayed on the electronic map. The linking point can be a point of interest that is directed to a geographical location and/or a user node that is directed to a digital content uploaded by the user. In one embodiment, when the application interface is executed in the user device, the serving system receives a location data from the user device. In the meantime, an initial page corresponding to the location data is shown on the application interface, and one or more linking points (such as a first linking point 401 and a second linking point 403 shown in the diagram) are provided. The linking point can be obtained by the system when the system matches the user preference by learning the browsed records and the activity data of the user. The linking points link to the location-based and/or personalized digital contents that match the user preference. The linking point may link to one or more addresses of one or more digital contents in the database. When the user selects one of the linking points, a digital content linked to the linking point is played.

In the exemplary example, the first linking point 401 acts as an indicator of a geographical location. The user can add a text annotation on one of the digital contents linked to the first linking point 401. The text annotation can be shown near the indicator. The second linking point 403 acts as an indicator for indicating a location-based digital content created by another user. A brief description used to describe the digital content or to describe the user can be added near the indicator. According to one of the embodiments, when the system obtains the digital contents that match the user preference, the linking icons represented by the first linking point 401 and the second linking point 403 are used to link to the personalized and/or location-based digital contents.

It should be noted that, to prevent an image of one geographic range from being too complicated, only several linking points are selected to be shown on the diagram. The linking points shown on the diagram mean that the digital contents associated therewith have higher scores when matching the user preference. Accordingly, the digital contents associated to the linking points that are shown are recommended by the system. The linking points can also be highlighted with a larger icon and an obvious symbol. Other linking points associated with the digital contents that have lower scores can be labeled with a simple icon, e.g., a smaller circle or symbol.

A thumbnail display section 43 at a bottom or any other place of the linking point display area 41 is provided. The thumbnail display section 43 includes several thumbnail images, and each of the thumbnail images links to a geographic data of a specific geographic range. Within the geographic range, one or more linking points recommended by the system (in accordance with the user preference) are shown. In an exemplary example, when the user slides his finger to drag one of the thumbnail images to the middle position of the thumbnail display section 43, an interactive instruction is generated such that the application program executed in the user device displays a geographic range associated with the thumbnail image on the linking point display area 41 according to the linking data of the thumbnail image. An area name of the geographic range can be shown on a specific position of the linking point display area 41. Further, in Fig. 4, the thumbnail display section 43 includes multiple thumbnail images, such as a first thumbnail image 407 and a second thumbnail image 409. When the user operates the thumbnail display section 43, the selected thumbnail image can be highlighted to emphasize the selection made by the user by changing its color or size.

In an exemplary example, the multiple thumbnail images shown in the thumbnail display section 43 can be expanded or shrunk according to a gesture of the user. When the user places his finger or an input device over a specific thumbnail image, the thumbnail image is selected and the selected thumbnail image can be highlighted by changing its color or by being expanded. A specific geographic range associated with the thumbnail image is displayed on the linking point display area 41 when the application program confirms the thumbnail image to be selected.

Once one of the thumbnail images is selected, when the application interface renders a geographic range displayed on the linking point display area 41, one or more linking points within the geographic range are displayed on linking point display area 41, and each of the linking points links to addresses of one or more digital contents in the database. In the diagram, an interactive interface section 47 that allows the user to operate and generate an interactive instruction is shown. The application program displays a corresponding function in response to the interactive instruction.

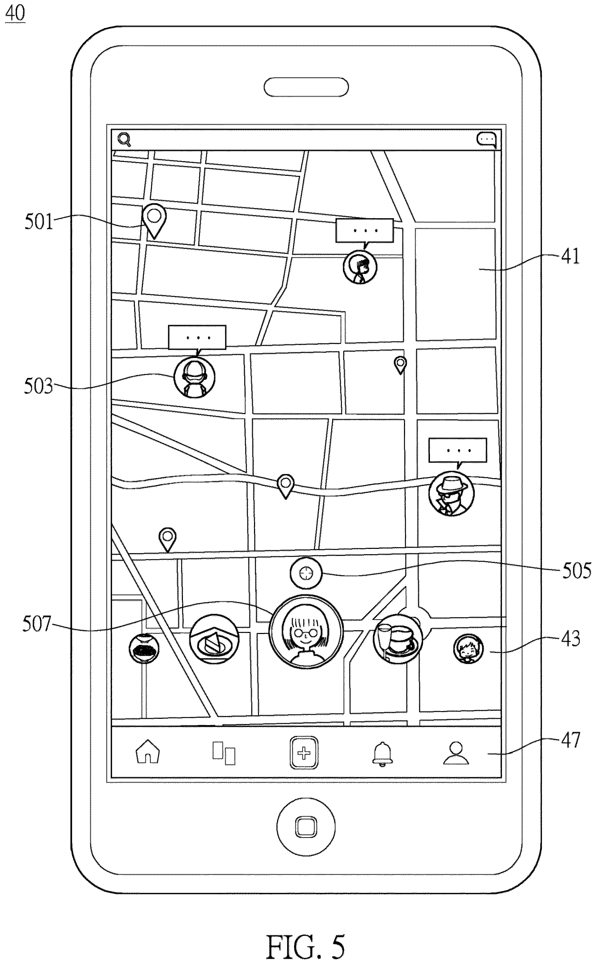

Reference is made to Fig. 5, which is a schematic diagram depicting the user interface according to one embodiment of the present disclosure.

The application interface 40 includes the above-mentioned linking point display area 41, the thumbnail display section 43 and the interactive interface section 47. When the user selects one of the thumbnail images in the thumbnail display section 43 (e.g., an expanded thumbnail image 507), a main page thumbnail image 505 can be at a specific position in the linking point display area 41 and is provided for the user to return to the main page quickly. After the thumbnail image 507 is selected, the linking point display area 41 of the application interface 40 switches to a geographic range corresponding to the selected thumbnail image 507. The serving system provides one or more linking points, such as a first linking point 501 and a second linking point 503 within the geographic range.

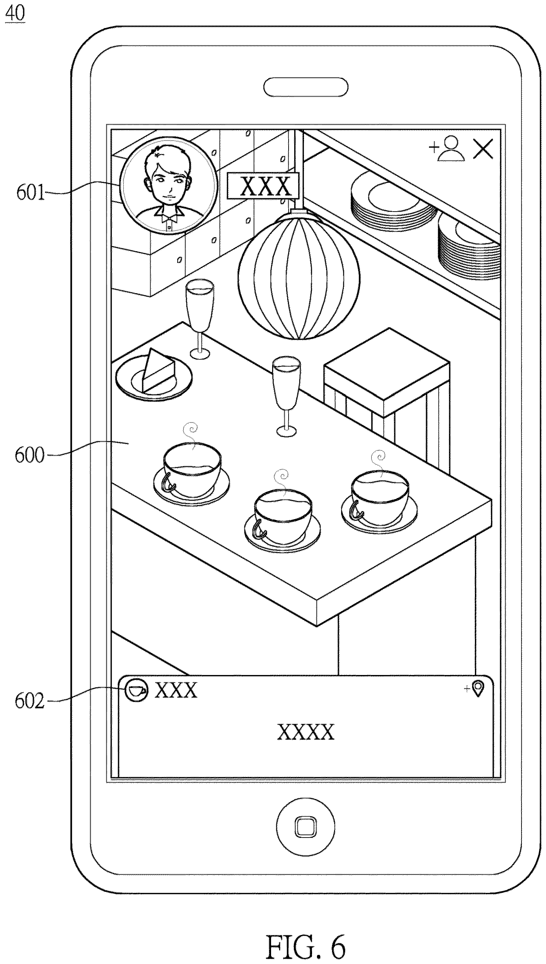

Next, the application interface 40 switches to a content display area 600 shown in Fig. 6 after the user selects one of the linking points. The content display area 600 displays a digital content associated with the selected linking point. The digital content (such as a video, an audio, an image or a text) is played. An information section 602 is used to show information of the digital content (such as an author, a geographical location, etc.). The linking image 601 shows a linking icon set by the user who owns the digital content.

For example, the user can select one of the thumbnail images in order to switch to a specific geographic range and obtain multiple linking points marked at different locations within the geographic range. Each of the linking points includes the addresses of one or more digital contents. After one or the linking points is selected, the digital content associated with the linking point can be obtained from the database. The content display area 600 is used to play the digital content. The multiple digital contents associated with the selected linking point are played in sequence.

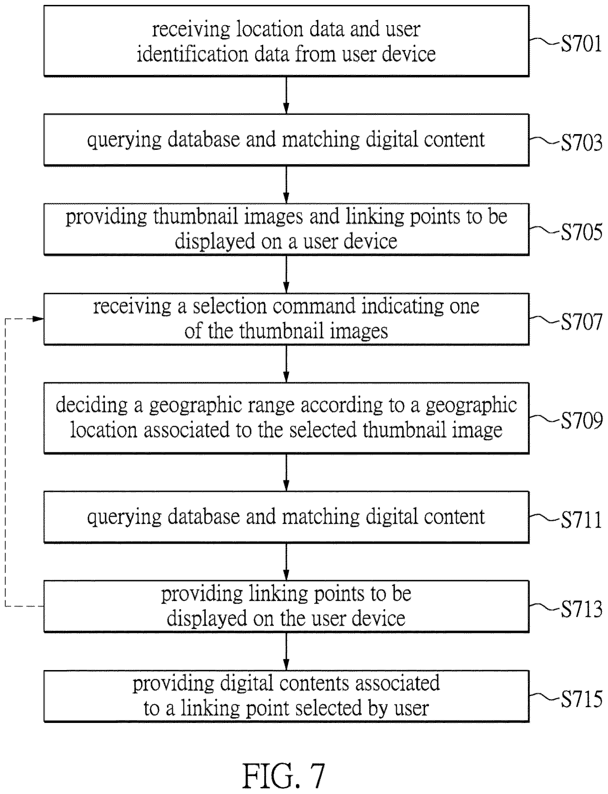

Reference is made to Fig. 7, which is a flow chart describing the method for recommending personalized content according to one embodiment of the present disclosure.

In the beginning, such as in step S701, the serving system receives a user identification data from the user device, and also acquires a location data. In step S703, the serving system queries the database according to the user identification data and/or the location data so as to obtain the digital contents that match the user preference. Also, the serving stem can obtain the location-based digital contents according to the location data.

According to a matching result, the serving system obtains the one or more digital contents that match the user preference. Each of the digital contents has a corresponding location data. The serving system groups the digital contents associated with the geographic data by a software-implemented method. For example, the serving system obtains multiple digital contents that match specific matching criteria in Paris downtown by querying the database. These location-based digital contents can be grouped, and a representative thumbnail image is generated. Multiple digital contents that match the user preference in Rome downtown can also be grouped, and a representative thumbnail image representing these digital contents in Rome downtown is generated. The serving system can therefore acquire the thumbnail images that represent the linking points of the multiple geographic ranges according to the matching result.

Next, such as in step S705, the serving system provides the thumbnail images and the linking points to the user device according to the matching result. After the thumbnail images and the linking points are transmitted to the user device, one or more thumbnail images displayed on the thumbnail display area in the application interface are rendered. The user can select one of the thumbnail images through a gesture or an input method performed by the user. The system determines a geographic range corresponding to the selected thumbnail image according to a calculation result based on weights specified to one or more reference indicators. For example, the size of the thumbnail image can be used to respond to the user's operation. The multiple thumbnail images are sequentially arranged for the user to make a selection. The thumbnail image is expanded after the application program executed in the user device acknowledges which thumbnail image is selected. In step S707, once one of the thumbnail images is selected, the application program receives a selection command with respect to the selected thumbnail image. A geographic range is determined according to the geographic location associated with the selected thumbnail image, such as in step S709. In addition to highlighting the thumbnail image, such as in step S711, the serving system receives the selection command at the same time. After the matched digital contents are obtained, the corresponding linking points within the geographic range are provided to the user device. The linking points include points of interest that are directed to geographical locations and/or the user points that are directed to the digital contents uploaded by the users, such as in step S713. The linking point can link to multiple digital contents, which means linking to addresses of the multiple digital contents in the database. These linking points displayed on the application interface can be ranked based on scores of the digital contents. The scores of the digital contents can be calculated based on numbers of likes, shares, viewings and user evaluations. The score of each of the digital contents can be provided for the system to determine whether or not to display the linking point on the application interface. A sequence for playing the digital contents of the selected linking point can be determined by ranking these digital contents.

After that, the user can go on selecting other thumbnail images, and the above-described steps S707 to S713 are repeated until one of the linking points is selected. The application interface then turns to a playback page shown in Fig. 6. In step S715, the serving system provides the digital contents according to the linking point selected by the user.

In one further embodiment of the present disclosure, when the user operates the user device to open the application interface, the serving system receives a location data from the user device. The matching criterion considered by the system includes a user preference and a location data. The serving system can therefore provide personalized and/or location-based digital contents. The location-based matching result allows the user device to show the one or more linking points at a location via the initial page, and also form the thumbnail images linked to different geographic ranges.

In summation, in the method and the system for recommending personalized content, and the graphical user interface provided by the present disclosure, the system provides the digital content (or location-based digital content) based on a user preference. One or more thumbnail images corresponding to different geographic ranges can be displayed on the application interface initiated in the user device. Through the graphical user interface, the user can select one of the thumbnail images or linking points. When one of the thumbnail images is selected, the application interface switches to the corresponding geographic range on the electronic map. The serving system provides links to the multiple digital contents within the geographic range, and the linking points corresponding to the links are displayed on the electronic map. In this way, the system manages to recommend the digital content to the user according to the user preference.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains.

## Claims

1. A method for recommending personalized content, the method comprising:
receiving a user identification data from a user device (111, 113, 115);
querying a database for acquiring a user preference, wherein the user preference is provided for the serving system to obtain one or more digital contents that are consistent with the user preference as recommended personalized content;
grouping the one or more digital contents according to location data corresponding to each of the digital contents;
rendering one or more thumbnail images representing one or more groups of digital contents within a geographic range;
providing the one or more thumbnail images to the user device (111, 113, 115), and displaying the one or more thumbnail images on a thumbnail display area (303) of an application interface (30) in the user device (111, 113, 115);
wherein, when a user selects one of the thumbnail images, the application interface (30) switches to the geographic range represented by the selected thumbnail image, and the serving system (100) provides one or more linking points within the geographic range and displays one or more linking icons corresponding to the one or more linking points on the application interface (30);
wherein, each of the linking points within the geographic range links to addresses of the one or more digital contents that the serving system (100) recommends in the database as recommended personalized content;
and when the linking point links to multiple digital contents, the multiple digital contents are played in sequence by the application interface (30) of the user device by selection of the linking point.

2. The method as recited in claim 1, wherein, when the application interface (30) is activated in the user device (111, 113, 115), a location data is received from the user device (111, 113, 115), so that an initial page corresponding to the location data is displayed on the application interface (30), and the serving system (100) provides one or more linking points displayed on the initial page.

3. The method as recited in claim 2, wherein, after obtaining the location data of the user device (111, 113, 115), the digital content matching the user preference and the location data is obtained, and the one or more corresponding thumbnail images are rendered.

4. The method as recited in claim 2, wherein the application interface (30) is a graphical user interface that employs an electronic map in a background.

5. The method as recited in claim 3, wherein the geographic range corresponding to each of the thumbnail images is determined according to a calculation result based on weights specified to one or more reference indicators as the activities of the user changing the geographical location, browsing the digital contents and the time thereof.

6. The method as recited in any of claims 1 to 5, wherein the user preference is established by steps of:
collecting, by the serving system (100), network activity data of the user through the user device (111, 113, 115);
forming personalized data of the user based on the network activity data; and
learning location-based data features and weights of the data features based on the personalized data of the user, so as to form a personalized preference model that is configured to describe the user preference, wherein the personalized preference model is configured to obtain the one or more digital contents that match the user preference in the database.

7. A graphical user interface that employs an electronic map in a background and that is rendered by a program executed in a user device (111, 113, 115), comprising:
an application interface (30) further comprising:
a linking point display area (301) configured to display the electronic map with a geographic range, wherein the geographic range includes one or more linking icons corresponding to one or more linking points provided by a serving system (100);
a thumbnail display area (303) configured to display one or more thumbnail images provided by the serving system (100) to the user device (111, 113, 115); and
an interactive interface section (305) configured to display multiple icons for a user to generate an interactive instruction;
wherein, the serving system (100) performs the method for recommending personalized content according to claim 1, when the serving system (100) receives a user identification data from the user device (111, 113, 115), the serving system (100) queries a database for acquiring data of a user preference which is provided for the serving system to obtain one or more digital contents that are consistent with the user preference as recommended personalized content, wherein the digital contents stored in the database are uploaded to the serving system by users and each of the digital contents carries a metadata that records a geographic data where the digital content was created;
the serving system (100), groups the one or more digital contents according to location data corresponding to each of the digital contents, renders one or more thumbnail images representing the one or more groups of digital contents within a geographic range, wherein the application interface (30) is configured to receive the one or more thumbnail images from the serving system and to display the one or more thumbnail images on the thumbnail display area (303) of an application interface (30) in the user device (111, 113, 115);
wherein, when a user selects one of the thumbnail images, the application interface (30) is configured to switch to the geographic range represented by the selected thumbnail image, and the application interface is configured to receive the one or more linking points within the geographic range from the serving system and to display the one or more linking icons corresponding to the one or more linking points on the application interface (30), and
wherein, each of the linking points within the geographic range links to addresses of the one or more digital contents in the database as recommended by the serving system; wherein the application interface is configured to play the multiple digital contents in sequence upon selection of a linking point, when the linking point links to multiple digital contents, the multiple digital contents are played in sequence by selection of the linking point.

8. The graphical user interface as recited in claim 7 is configured to highlight a selected thumbnail image, when the multiple thumbnail images displayed on the thumbnail display area (303) are expanded or shrunk based on a gesture performed by the user, and one of the thumbnail images is selected.

9. The graphical user interface as recited in claim 7 is configured to, when the application interface (30) is activated in the user device (111, 113, 115), receive a location data from the user device (111, 113, 115), so that an initial page corresponding to the location data is displayed on the application interface (30), and the serving system (100) provides one or more linking points displayed on the initial page; when the user device (111, 113, 115) operates the electronic map displayed on the linking point display area (301) to select the geographic range, the serving system (100) receives geographic data generated by the user device (111, 113, 115) and obtains the one or more linking points within the geographic range by querying the database.

10. The graphical user interface as recited in any of claims 7 to 9, wherein the geographic range corresponding to each of the thumbnail images is determined according to a calculation result based on weights specified to one or more reference indicators as the activities of the user changing the geographical location, browsing the digital contents and the time thereof.

11. A system for recommending personalized content, comprising:
a serving system (100) having a database that configured to store multiple digital contents, wherein each of the digital contents is associated with a geographical location, wherein the serving system is configured to receive the multiple digital contents stored in the database as uploads from users and each of the digital contents carries a metadata that records a geographic data where the digital content was created;
a user device comprising the graphical user interface according to any one of claims 7-10,
wherein, when the serving system (100) receives a user identification data from a user device (111, 113, 115), the serving system (100) is configured to query a database for acquiring data of a user preference which is provided for the serving system to obtain one or more digital contents that are consistent with the user preference from the database as recommended personalized content, to group the one or more digital contents according to location data corresponding to each of the digital contents, to render one or more thumbnail images representing the one or more groups of digital contents within a geographic range, and to provide the one or more thumbnail images to the user device (111, 113, 115);
and the serving system (100) being configured to provide the one or more linking points within the geographic range such that the one or more linking icons corresponding to the one or more linking points are displayed on the application interface (30).

12. The system as recited in claim 11, is configured to receive when the application interface (30) is activated in the user device (111, 113, 115), a location data from the user device (111, 113, 115), so that an initial page corresponding to the location data is displayed on the application interface (30), and the serving system (100) is configured to [4.3]provide one or more linking points displayed on the initial page; after obtaining the location data of the user device (111, 113, 115), the digital content matching the user preference and the location data is obtained, and one or more corresponding thumbnail images are rendered.

13. The system as recited in according to any of claims 11 to 12, wherein the user preference is established by steps of:
collecting, by the serving system (100), network activity data of the user through the user device (111, 113, 115);
forming personalized data of the user based on the network activity data; and
learning location-based data features and weights of the data features based on the personalized data of the user, so as to form a personalized preference model that is configured to describe the user preference, wherein the personalized preference model is configured to obtain the one or more digital contents that match the user preference in the database.

## Patentansprüche

1. Ein Verfahren zum Empfehlen personalisierter Inhalte, wobei das Verfahren aufweist:
Empfangen von Benutzer-Identifikationsdaten von einem Benutzergerät (111, 113, 115);
Abfragen einer Datenbank zum Erfassen einer Benutzerpräferenz, wobei die Benutzerpräferenz für das Dienstsystem bereitgestellt wird, um einen oder mehrere digitale Inhalte, die mit der Benutzerpräferenz übereinstimmen, als empfohlene, personalisierte Inhalte zu erhalten;
Gruppieren des einen digitalen Inhaltes oder mehrerer digitalen Inhalte entsprechend den Standortdaten, die jedem der digitalen Inhalte entsprechen;
Darstellen eines oder mehrerer Miniaturbilder, die eine Gruppe oder mehrere Gruppen von digitalen Inhalten innerhalb eines geografischen Bereichs darstellen;
Bereitstellen des einen Miniaturbildes oder mehrere Miniaturbilder an das Benutzergerät (111, 113, 115), und Anzeigen des einen Miniaturbildes oder mehrerer Miniaturbilder auf einem Miniaturbild-Anzeigebereich (303) von einer Anwendungsschnittstelle (30) im Benutzergerät (111, 113, 115);
wobei, wenn ein Benutzer eines der Miniaturbilder auswählt, die Anwendungsschnittstelle (30) zu dem geografischen Bereich wechselt, der durch das ausgewählte Miniaturbild dargestellt wird, und das Dienstsystem (100) einen Verknüpfungspunkt oder mehrere Verknüpfungspunkte innerhalb des geografischen Bereichs bereit stellt und ein Verknüpfungssymbol oder mehrere Verknüpfungssymbole entsprechend dem einen Verknüpfungspunkt oder mehreren Verknüpfungspunkten auf der Anwendungsschnittstelle (30) zeigt;
wobei jeder der Verknüpfungspunkte innerhalb des geografischen Bereichs Adressen des einen digitalen Inhaltes oder der mehreren, digitalen Inhalte verlinkt, die das Dienstsystem (100) in der Datenbank als empfohlenen, personalisierten Inhalt empfiehlt;
und wenn der Verknüpfungspunkt auf mehrere, digitale Inhalte verweist, werden die mehreren, digitalen Inhalte nacheinander durch die Anwendungsschnittstelle (30) des Benutzergeräts durch Auswahl des Verknüpfungspunkts abgespielt.

2. Verfahren wie in Anspruch 1 rezitiert, wobei, wenn die Anwendungsschnittstelle (30) im Benutzergerät (111, 113, 115) aktiviert wird, wird ein Standortdatum vom Benutzergerät (111, 113, 115) empfangen, so dass eine Anfangsseite entsprechend zu den Standortdaten auf der Anwendungsschnittstelle (30) angezeigt wird, und das Dienstsystem (100) einen Verknüpfungspunkt oder mehrere Verknüpfungspunkte auf der Anfangsseite bereitstellt.

3. Verfahren wie in Anspruch 2 rezitiert, wobei, nach Erhalt der Standortdaten des Benutzergeräts (111, 113, 115) die digitalen Inhalte abgerufen werden, die der Benutzerpräferenz und den Standortdaten entsprechen, und das eine Miniaturbild oder die mehreren entsprechenden Miniaturbilder werden dargestellt.

4. Verfahren wie in Anspruch 2 rezitiert, wobei die Anwendungsschnittstelle (30) eine grafische Benutzeroberfläche ist, die eine elektronische Karte im Hintergrund verwendet.

5. Das Verfahren wie in Anspruch 3 rezitiert, wobei der geografische Bereich entsprechend jedem der Miniaturbilder gemäß eines Berechnungsergebnisses basierend auf Gewichtungen bestimmt, die aufgeführt sind zu einen oder mehreren Referenzindikatoren als Aktivitäten des Benutzers, der den geografischen Standort ändern, wobei die digitalen Inhalte und deren Zeitpunkt durchsucht werden.

6. Das Verfahren wie in irgendeinem der Ansprüche 1 bis 5 rezitiert, wobei die Benutzerpräferenz durch folgende Schritte hergestellt wird:
Sammeln durch das Dienstsystem (100) von Netzwerkaktivitätsdaten des Benutzers durch das Benutzergerät (111, 113, 115);
Bilden personalisierter Daten des Benutzers basierend auf den Netzwerkaktivitätsdaten; und
Lernen standortbasierter Datenmerkmale und Gewichtungen der Datenmerkmale basierend auf den personalisierten Daten des Nutzers, um so ein personalisiertes Präferenzmodell zu bilden, das konfiguriert ist, um die Benutzerpräferenz zu beschreiben, wobei das personalisierte Präferenzmodell konfiguriert ist, um einen digitalen Inhalt oder mehrere digitale Inhalte zu erhalten, die der Benutzerpräferenz in der Datenbank entsprichtr oder entsprechen.

7. Eine grafische Benutzerschnittstelle, die eine elektronische Karte im Hintergrund benutzt, und die durch ein Programm übersetzt wird, das in einem Benutzergerät (111, 113, 115) ausgeführt wird, wobei sie aufweist:
eine Anwendungsschnittstelle (30), die außerdem aufweist:
einen Verknüpfungspunkt-Anzeigebereich (301), der zum Anzeigen der elektronischen Karte mit einem geografischen Bereich konfiguriert ist, wobei der geografische Bereich ein Verknüpfungssymbol oder mehrere Verknüpfungssymbole entsprechend einem Verbindungspunkt oder mehreren Verbindungspunkten aufweist, die von einem Dienstsystem (100) bereitgestellt werden;
einen Miniaturbild-Anzeigebereich (303), der zum Anzeigen eines Miniaturbildes oder mehrere Miniaturbilder konfiguriert ist, die vom Dienstsystem (100) dem Benutzergerät (111, 113, 115) bereitgestellt werden; und
einen interaktiven Schnittstellenabschnitt (305), der zum Anzeigen mehrere Symbole für einen Benutzer konfiguriert ist, um eine interaktive Anweisung zu generieren;
wobei das Dienstsystem (100) das Verfahren zum Empfehlen personalisierter Inhalte nach Anspruch 1 ausführt, wenn das Dienstsystem (100) ein Benutzer-Identifikationsdatum vom Benutzergerät (111, 113, 115) empfängt, fragt das Dienstsystem (100) eine Datenbank ab, um Daten einer Benutzerpräferenz zu erfassen, die für das Dienstsystem bereitgestellt wird, um einen digitalen Inhalt oder mehrere digitale Inhalte zu erhalten, die mit der Benutzerpräferenz als empfohlener personalisierter Inhalt übereinstimmen, wobei die, in der Datenbank gespeicherten, digitalen Inhalte von Benutzern auf das Dienstsystem hochgeladen werden und jeder der digitalen Inhalte enthält Metadaten, die ein geografisches Datum aufzeichnen, wo der digitale Inhalt erstellt wurde;
das Dienstsystem (100) gruppiert den einen digitalen Inhalt oder mehrere digitalen Inhalte gemäß den Standortdaten, die jedem der digitalen Inhalte entsprechen, rendert ein Miniaturbild oder mehrere Miniaturbilder, das oder die ein Gruppe oder mehrere Gruppen digitalen Inhalts innerhalb eines geografischen Bereichs darstellt oder darstellen, wobei die Anwendungsschnittstelle (30) zum Empfangen des einen Miniaturbilds oder mehrerer Miniaturbilder vom Dienstsystem konfiguriert ist und zum Anzeigen des einen Miniaturbildes oder mehrerer Miniaturbilder am Miniaturbild-Anzeigebereich (303) einer Anwendungsschnittstelle (30) im Benutzergerät (111, 113, 115) konfiguriert ist;
wobei, wenn ein Benutzer eines der Miniaturbilder auswählt, die Anwendungsschnittstelle (30) konfiguriert ist, um zu den, durch das ausgewählte Bild repräsentierte, geografischen Bereich zu wechseln und die Anwendungsschnittstelle ist für den Empfang des einen Verknüpfungspunktes oder mehrerer Verknüpfungspunkte innerhalb des geografischen Bereichs des Dienstsystems konfiguriert und zur Anzeige des einen Verknüpfungssymbols oder mehrere Verknüpfungssymbole, der oder die dem einen Verknüpfungspunkt oder den mehreren Verknüpfungspunkten auf der Anwendungsschnittstelle (30) entspricht oder entsprechen, und
wobei jeder der Verknüpfungspunkte innerhalb des geografischen Bereichs mit Adressen des einen digitalen Inhalts oder mehrerer digitalen Inhalte in der Datenbank verlinkt ist, wie vom Dienstsystem empfohlen; wobei die Anwendungsschnittstelle konfiguriert ist, um die mehreren digitalen Inhalte der Reihe nach, nach der Auswahl eines Verknüpfungspunkts darzustellen, wenn der Verknüpfungspunkt auf einen Link mit mehreren digitalen Inhalten verweist, werden die mehreren digitalen Inhalte durch Auswahl des Verknüpfungspunkts nacheinander abgespielt.

8. Die grafische Benutzeroberfläche, wie in Anspruch 7 rezitiert, ist konfiguriert, um ein ausgewähltes Miniaturbild hervorzuheben, wenn mehrere Miniaturbilder, die am Miniaturbild-Anzeigebereich (303) angezeigt werden, basierend auf einer vom Benutzer ausgeführten Geste vergrößert oder verkleinert werden, und wenn eines der Miniaturbilder ausgewählt wird.

9. Die grafische Benutzeroberfläche, wie in Anspruch 7 rezitiert, ist konfiguriert, um, wenn die Anwendungsschnittstelle (30) im Benutzergerät (111, 113, 115) aktiviert ist, Standortdaten vom Benutzergerät (111, 113, 115) zu empfangen, so dass eine erste Seite entsprechend den Standortdaten auf der Anwendungsschnittstelle (30) angezeigt wird, und das Dienstsystem (100) stellt einen Verknüpfungspunkt oder mehrere Verknüpfungspunkte bereit, der oder die auf der Startseite angezeigt werden; wenn das Benutzergerät (111, 113, 115) die elektronische Karte betreibt, die auf dem Verbindungspunktanzeigebereich (301) zum Auswählen des geografischen Bereichs angezeigt wird, das Dienstsystem (100) empfängt geografische Daten, die vom Benutzergerät (111, 113, 115) generiert wurden, und erhält den einen Verknüpfungspunkt oder mehrere Verknüpfungspunkte innerhalb des geografischen Bereichs durch Abfrage der Datenbank.

10. Die grafische Benutzeroberfläche, wie in irgend einem der Ansprüche 7 bis 9 rezitiert, wobei der geografische Bereich entsprechend jedem der Miniaturbilder gemäß eines Berechnungsergebnis bestimmt wird, das auf Gewichtungen basiert, die zu einem Referenzindikator oder mehrere Referenzindikatoren als Aktivitäten des Benutzers/der Benutzerin angegeben sind, der/die den geografischen Standort ändert, wobei die digitalen Inhalte und die Zeit davon durchstöbert werden.

11. Ein System zum Empfehlen personalisierten Inhaltes, bestehend aus:
einem Dienstsystem (100) mit einer Datenbank, die zum Speichern mehrerer digitaler Inhalte konfiguriert ist, wobei jeder der digitalen Inhalte einem geografischen Standort zugeordnet ist, wobei das Dienstsystem zum Empfangen der mehreren digitalen Inhalte konfiguriert ist, die in der Datenbank als Uploads von Benutzern gespeichert sind und jeder der digitalen Inhalte trägt ein Metadatum, das ein geografische Datum aufzeichnet, wo der digitale Inhalt erstellt wurde;
ein Benutzergerät, das die grafische Benutzerschnittstelle gemäß irgendeinem der Ansprüche 7 bis 10 aufweist,
wobei, wenn das Dienstsystem (100) Benutzer-Identifikationsdaten von einem Benutzergerät (111, 113, 115) empfängt, das Dienstsystem (100) konfiguriert ist, um eine Datenbank zum Erfassen von Daten einer Benutzerpräferenz abzufragen, die für das Dienstsystem bereitgestellt werden, um einen digitale Inhalt oder mehrere digitale Inhalte, die mit der Benutzerpräferenz aus der Datenbank übereinstimmt oder übereinstimmen, als empfohlener personalisierter Inhalt zu erhalten, um den einen digitalen Inhalt oder mehrere digitale Inhalte, gemäß Standortdaten zu gruppieren, die jedem der digitalen Inhalte entsprechen, um ein Miniaturbild oder mehrere Miniaturbilder zu rendern, das oder die eine digitale Gruppe oder mehrere digitale Gruppen der digitalen Inhalte innerhalb eines geografischen Bereichs darstellt oder darstellen, und um ein Miniaturbild oder mehrere Miniaturbilder für das Benutzergerät (111, 113, 115) bereitzustellen;
und wobei das Dienstsystem (100) konfiguriert ist, um den einen Verknüpfungspunkt oder mehrere Verknüpfungspunkte innerhalb des geografischen Bereichs bereitzustellen, so dass das eine Verknüpfungssymbol oder mehrere Verknüpfungssymbole, das oder die dem einen Verknüpfungspunkt oder den mehreren Verknüpfungspunkten entspricht oder entsprechen, an der Anwendungsschnittstelle (30) angezeigt wird oder werden.

12. Das System, wie in Anspruch 11 rezitiert, ist konfiguriert, wenn die Anwendungsschnittstelle (30) im Benutzergerät (111, 113, 115) aktiviert ist, um ein Standortdatum aus dem Benutzergerät (111, 113, 115) zu empfangen, so dass eine den Standortdatum entsprechende Startseite auf der Anwendungsschnittstelle (30) angezeigt wird, und das Dienstsystem (100) konfiguriert wird, um einen Verknüpfungspunkt oder mehrere Verknüpfungspunkte bereitzustellen, der oder die auf der Startseite angezeigt wird oder werden; wobei nach dem Erhalt des Standortdatum des Benutzergeräts (111, 113, 115), der digitale Inhalt zu der Benutzerpräferenz passt und das Standortdatum erhalten ist, und ein entsprechendes Miniaturbild oder mehrere entsprechende Miniaturbilder gerendert ist oder sind.

13. Das System wie rezitiert gemäß irgend einem der Ansprüche 11 bis 12, wobei die Benutzerpräferenz festgelegt wird durch Schritte des:
Sammelns, durch das Dienstsystem (100), von Netzwerkaktivitätsdaten des Benutzers durch das Benutzergerät (111, 113, 115);
Bildens personalisierter Daten des Benutzers basierend auf den Netzwerkaktivitätsdaten; und
Lernens standortbasierter Datenmerkmale und Gewichtungen der Datenmerkmale basierend auf den personalisierten Daten des Nutzers, um so ein personalisiertes Präferenzmodell zu bilden, das konfiguriert ist, um die Benutzerpräferenz zu beschreiben, wobei das personalisiertes Präferenzmodell konfiguriert ist, um einen digitalen Inhalt oder mehrere digitale Inhalte zu erhalten, der oder die der Benutzerpräferenz in der Datenbank entspricht oder entsprechen.

## Revendications

1. Procédé de recommandation de contenu personnalisé, le procédé comprenant :
la réception de données d'identification d'utilisateur depuis un dispositif d'utilisateur (111, 113, 115) ;
l'interrogation d'une base de données pour acquérir une préférence d'utilisateur, dans lequel la préférence d'utilisateur est fournie pour le système de desserte pour obtenir un ou plusieurs contenus numériques qui sont conformes à la préférence d'utilisateur en tant que contenu personnalisé recommandé ;
le regroupement des un ou plusieurs contenus numériques en fonction de données d'emplacement correspondant à chacun des contenus numériques ;
le rendu d'une ou plusieurs images miniatures représentant un ou plusieurs groupes de contenus numériques à l'intérieur d'une plage géographique ;
la fourniture des une ou plusieurs images miniatures au dispositif d'utilisateur (111, 113, 115), et l'affichage des une ou plusieurs images miniatures sur une zone d'affichage d'images miniatures (303) d'une interface d'application (30) dans le dispositif d'utilisateur (111, 113, 115) ;
dans lequel, lorsqu'un utilisateur sélectionne l'une des images miniatures, l'interface d'application (30) commute à la plage géographique représentée par l'image miniature sélectionnée, et le système de desserte (100) fournit un ou plusieurs points de liaison à l'intérieur de la plage géographique et affiche une ou plusieurs icônes de liaison correspondant aux un ou plusieurs points de liaison sur l'interface d'application (30) ;
dans lequel chacun des points de liaison à l'intérieur de la plage géographique relie à des adresses des un ou plusieurs contenus numériques que le système de desserte (100) recommande dans la base de données en tant que contenu personnalisé recommandé ;
et, lorsque le point de liaison relie à de multiples contenus numériques, les multiples contenus numériques sont lus dans l'ordre par l'interface d'application (30) du dispositif d'utilisateur par la sélection du point de liaison.

2. Procédé selon la revendication 1, dans lequel, lorsque l'interface d'application (30) est activée dans le dispositif d'utilisateur (111, 113, 115), des données d'emplacement sont reçues depuis le dispositif d'utilisateur (111, 113, 115), de sorte qu'une page initiale correspondant aux données d'emplacement soit affichée sur l'interface d'application (30), et le système de desserte (100) fournit un ou plusieurs points de liaison affichés sur la page initiale.

3. Procédé selon la revendication 2, dans lequel, après l'obtention des données d'emplacement du dispositif d'utilisateur (111, 113, 115), le contenu numérique correspondant à la préférence d'utilisateur et aux données d'emplacement est obtenu, et les une ou plusieurs images miniatures correspondantes sont rendues.

4. Procédé selon la revendication 2, dans lequel l'interface d'application (30) est une interface utilisateur graphique qui emploie une carte électronique dans un arrière-plan.

5. Procédé selon la revendication 3, dans lequel la plage géographique correspondant à chacune des images miniatures est déterminée en fonction d'un résultat de calcul sur la base de poids spécifiés à un ou plusieurs indicateurs de référence en tant que les activités de l'utilisateur changeant l'emplacement géographique, parcourant les contenus numériques et leur temps.

6. Procédé selon l'une quelconque des revendications 1 à 5, dans lequel la préférence d'utilisateur est établie par les étapes consistant à :
collecter, par le système de desserte (100), des données d'activité de réseau de l'utilisateur par l'intermédiaire du dispositif d'utilisateur (111, 113, 115) ;
former des données personnalisées de l'utilisateur sur la base des données d'activité de réseau ; et
apprendre des caractéristiques de données basées sur l'emplacement et des poids des caractéristiques de données sur la base des données personnalisées de l'utilisateur, de manière à former un modèle de préférence personnalisée qui est configuré pour décrire la préférence d'utilisateur, dans lequel le modèle de préférence personnalisée est configuré pour obtenir les un ou plusieurs contenus numériques qui correspondent à la préférence d'utilisateur dans la base de données.

7. Interface utilisateur graphique qui emploie une carte électronique dans un arrière-plan et qui est rendue par un programme exécuté dans un dispositif d'utilisateur (111, 113, 115), comprenant :
une interface d'application (30) comprenant en outre :
une zone d'affichage de points de liaison (301) configurée pour afficher la carte électronique avec une plage géographique, dans laquelle la plage géographique comporte une ou plusieurs icônes de liaison correspondant à un ou plusieurs points de liaison fournis par un système de desserte (100) ;
une zone d'affichage d'images miniatures (303) configurée pour afficher une ou plusieurs images miniatures fournies par le système de desserte (100) au dispositif d'utilisateur (111, 113, 115) ; et
une section d'interface interactive (305) configurée pour afficher de multiples icônes permettant à un utilisateur de générer une instruction interactive ;
dans laquelle le système de desserte (100) réalise le procédé de recommandation de contenu personnalisé selon la revendication 1, lorsque le système de desserte (100) reçoit des données d'identification d'utilisateur depuis le dispositif d'utilisateur (111, 113, 115), le système de desserte (100) interroge une base de données pour acquérir des données d'une préférence d'utilisateur qui est fournie pour le système de desserte pour obtenir un ou plusieurs contenus numériques qui sont conformes à la préférence d'utilisateur en tant que contenu personnalisé recommandé, dans laquelle les contenus numériques stockés dans la base de données sont chargés dans le système de desserte par des utilisateurs et chacun des contenus numériques porte des métadonnées qui enregistrent des données géographiques indiquant le lieu de création du contenu numérique ;
le système de desserte (100) regroupe les un ou plusieurs contenus numériques en fonction de données d'emplacement correspondant à chacun des contenus numériques, réalise le rendu d'une ou plusieurs images miniatures représentant les un ou plusieurs groupes de contenus numériques à l'intérieur d'une plage géographique, dans laquelle l'interface d'application (30) est configurée pour recevoir les une ou plusieurs images miniatures depuis le système de desserte et pour afficher les une ou plusieurs images miniatures sur la zone d'affichage d'images miniatures (303) d'une interface d'application (30) dans le dispositif d'utilisateur (111, 113, 115) ;
dans laquelle, lorsqu'un utilisateur sélectionne l'une des images miniatures, l'interface d'application (30) est configurée pour commuter à la plage géographique représentée par l'image miniature sélectionnée, et l'interface d'application est configurée pour recevoir les un ou plusieurs points de liaison à l'intérieur de la plage géographique depuis le système de desserte et pour afficher les une ou plusieurs icônes de liaison correspondant aux un ou plusieurs points de liaison sur l'interface d'application (30), et
dans laquelle chacun des points de liaison à l'intérieur de la plage géographique relie à des adresses des un ou plusieurs contenus numériques dans la base de données que le système de desserte recommande ; dans laquelle l'interface d'application est configurée pour lire les multiples contenus numériques dans l'ordre à la sélection d'un point de liaison, lorsque le point de liaison relie à de multiples contenus numériques, les multiples contenus numériques sont lus dans l'ordre par la sélection du point de liaison.

8. Interface utilisateur graphique selon la revendication 7, configurée pour mettre en surbrillance une image miniature sélectionnée lorsque les multiples images miniatures affichées sur la zone d'affichage d'images miniatures (303) sont agrandies ou réduites sur la base d'un geste réalisé par l'utilisateur, et l'une des images miniatures est sélectionnée.

9. Interface utilisateur graphique selon la revendication 7, configurée pour, lorsque l'interface d'application (30) est activée dans le dispositif d'utilisateur (111, 113, 115), recevoir des données d'emplacement depuis le dispositif d'utilisateur (111, 113, 115), de sorte qu'une page initiale correspondant aux données d'emplacement soit affichée sur l'interface d'application (30), et le système de desserte (100) fournit un ou plusieurs points de liaison affichés sur la page initiale ; lorsque le dispositif d'utilisateur (111, 113, 115) actionne la carte électronique affichée sur la zone d'affichage de points de liaison (301) pour sélectionner la plage géographique, le système de desserte (100) reçoit des données géographiques générées par le dispositif d'utilisateur (111, 113, 115) et obtient les un ou plusieurs points de liaison à l'intérieur de la plage géographique par l'interrogation de la base de données.

10. Interface utilisateur graphique selon l'une quelconque des revendications 7 à 9, dans laquelle la plage géographique correspondant à chacune des images miniatures est déterminée en fonction d'un résultat de calcul sur la base de poids spécifiés à un ou plusieurs indicateurs de référence en tant que les activités de l'utilisateur changeant l'emplacement géographique, parcourant les contenus numériques et leur temps.

11. Système de recommandation de contenu personnalisé, comprenant :
un système de desserte (100) présentant une base de données configurée pour stocker de multiples contenus numériques, dans lequel chacun des contenus numériques est associé à un emplacement géographique, dans lequel le système de desserte est configuré pour recevoir les multiples contenus numériques stockés dans la base de données en tant que chargements d'utilisateurs et chacun des contenus numériques porte des métadonnées qui enregistrent des données géographiques du lieu de création du contenu numérique ;
un dispositif d'utilisateur comprenant l'interface utilisateur graphique selon l'une quelconque des revendications 7 à 10,
dans lequel, lorsque le système de desserte (100) reçoit des données d'identification d'utilisateur depuis un dispositif d'utilisateur (111, 113, 115), le système de desserte (100) est configuré pour interroger une base de données pour acquérir une préférence d'utilisateur qui est fournie pour le système de desserte pour obtenir un ou plusieurs contenus numériques qui sont conformes à la préférence d'utilisateur à partir de la base de données en tant que contenu personnalisé recommandé, regrouper les un ou plusieurs contenus numériques en fonction de données d'emplacement correspondant à chacun des contenus numériques, réaliser le rendu d'une ou plusieurs images miniatures représentant les un ou plusieurs groupes de contenus numériques à l'intérieur d'une plage géographique, et fournir les une ou plusieurs images miniatures au dispositif d'utilisateur (111, 113, 115) ;
et le système de desserte (100) étant configuré pour fournir les un ou plusieurs points de liaison à l'intérieur de la plage géographique de sorte que les une ou plusieurs icônes de liaison correspondant aux un ou plusieurs points de liaison soient affichées sur l'interface d'application (30).

12. Système selon la revendication 11, configuré pour recevoir, lorsque l'interface d'application (30) est activée dans le dispositif d'utilisateur (111, 113, 115), des données d'emplacement depuis le dispositif d'utilisateur (111, 113, 115), de sorte qu'une page initiale correspondant aux données d'emplacement soit affichée sur l'interface d'application (30), et le système de desserte (100) est configuré pour [4.3]fournir un ou plusieurs points de liaison affichés sur la page initiale ; après l'obtention des données d'emplacement du dispositif d'utilisateur (111, 113, 115), le contenu numérique correspondant à la préférence d'utilisateur et aux données d'emplacement est obtenu, et les une ou plusieurs images miniatures correspondantes sont rendues.

13. Système selon l'une quelconque des revendications 11 et 12, dans lequel la préférence d'utilisateur est établie par les étapes consistant à :
collecter, par le système de desserte (100), des données d'activité de réseau de l'utilisateur par l'intermédiaire du dispositif d'utilisateur (111, 113, 115) ;
former des données personnalisées de l'utilisateur sur la base des données d'activité de réseau ; et
apprendre des caractéristiques de données basées sur l'emplacement et des poids des caractéristiques de données sur la base des données personnalisées de l'utilisateur, de manière à former un modèle de préférence personnalisée qui est configuré pour décrire la préférence d'utilisateur, dans lequel le modèle de préférence personnalisée est configuré pour obtenir les un ou plusieurs contenus numériques qui correspondent à la préférence d'utilisateur dans la base de données.
